# EUROPEAN PATENT APPLICATION

(11) **EP 4 749 101 A1**
(43) Date of publication of application: **27.05.2026**
(21) Application number: 24842824.5
(22) Date of filing: 27.05.2024
(51) Int. Cl.: F01N 5/02, F01N 13/08

(54) **EXHAUST HEAT RECOVERY DEVICE**

(30) Priority: 19.07.2023 JP 2023117570
(71) Applicant: Marelli Corporation, Saitama-city, Saitama 331-0812 (JP)
(72) Inventor: CHIBA, Naoharu, Saitama-City, Saitama 331-0812 (JP); NAKAJIMA, Shirou, Saitama-City, Saitama 331-0812 (JP); HISANAGA, Tooru, Saitama-City, Saitama 331-0812 (JP)
(74) Representative: Grünecker Patent- und Rechtsanwälte PartG mbB
(86) International application number: PCT/JP2024/019349
(87) International publication number: WO 2025/018028

(57) **Abstract**

An exhaust heat recovery device (1) includes: a first flow path member (10) having a first flow path through which a exhaust gas flows; a second flow path member (20) adjacent to the first flow path member (10), including a heat exchanger (30), and having a second flow path; and a valve mechanism (40) that opens and closes the first flow path and blocks or inhibits a flow of the exhaust gas from the second flow path. The valve mechanism (40) includes a valve body (43) that closes the first flow path in a heat recovery state in which the first flow path is closed, and a shutter portion (42) that blocks or inhibits the flow of the exhaust gas from the second flow path in a non-heat recovery state in which the first flow path is opened, the first flow path member (10) includes a first rising portion (17) rising toward an inside of the first flow path, and an end portion (43a) of the valve body (43) abuts on or approaches the first rising portion (17) in the heat recovery state of the valve body (43).

## Description

### TECHNICAL FIELD

The present invention relates to an exhaust heat recovery device.

### BACKGROUND ART

JP 2021-188567 A discloses an exhaust heat recovery device including a first flow path member having a first flow path through which an exhaust gas flows, a second flow path member provided adjacent to the first flow path and having a second flow path bypassing the first flow path, and a heat exchanger that performs heat exchange between the exhaust gas and a refrigerant.

The exhaust heat recovery device described in JP 2021-188567 A includes a valve mechanism including a butterfly valve that opens and closes the first flow path by a rotation shaft orthogonal to a flow direction of the exhaust gas in the first flow path, and a shutter portion that closes an outflow port of the second flow path which is a bypass path when the butterfly valve opens the first flow path, and opens the outflow port when the butterfly valve closes the first flow path, the valve mechanism switching a flow path of the exhaust gas between the first flow path and the second flow path.

### SUMMARY OF INVENTION

In the exhaust heat recovery device disclosed in JP 2021-188567 A, it is assumed that an outer peripheral wall of the tubular shutter portion comes into surface contact with an inner wall of the first flow path member to close the outflow port, but in order to achieve this, it is necessary to accurately match dimensions of the two. That is, when a tubular shape of the shutter portion is formed to be relatively larger than the inner wall (inner circumference) of the first flow path member due to tolerances between the two, a tip of the shutter portion comes into corner contact with the inner wall of the first flow path member.

According to an aspect of the present invention, there is provided an exhaust heat recovery device that recovers heat of an exhaust gas exhausted from an engine by heat exchange with a fluid, the device including: a first flow path member in which a first flow path through which an exhaust gas flows is formed; a second flow path member which is provided adjacent to the first flow path member, in which a second flow path bypassing a part of the first flow path is formed, and which includes a heat exchanger that performs heat exchange between the exhaust gas flowing in the second flow path and the fluid; and a valve mechanism which is provided in the first flow path, in which the first flow path member includes an outflow port for the exhaust gas from the first flow path to the second flow path, an inflow port for the exhaust gas from the second flow path to the first flow path, and a first rising portion located upstream of the inflow port in the first flow path, extending in a direction orthogonal to a flow direction of the exhaust gas, and rising toward an inside of the first flow path, the valve mechanism includes a rotation shaft portion, a valve body configured to rotate with rotation of the rotation shaft portion and to close or open the first flow path, and a shutter portion configured to rotate with the rotation of the rotation shaft portion and to block or inhibit a flow of the exhaust gas from the inflow port, in a heat recovery state, the valve body of the valve mechanism closes the first flow path, and the shutter portion releases a flow of the exhaust gas from the inflow port, in a non-heat recovery state, the valve body of the valve mechanism opens the first flow path, and the shutter portion blocks or inhibits a flow of the exhaust gas from the inflow port, in the non-heat recovery state, a gap is formed in a direction of separation between the inflow port and the shutter portion, the first rising portion is formed to be larger than the gap in a height direction from an outside to the inside of the first flow path, and a tip of the shutter portion abuts on or approaches the first rising portion in the non-heat recovery state.

According to the exhaust heat recovery device of the present invention, in a heat recovery state, it is possible to prevent corner contact between a tip of a shutter portion and an inner wall of a first flow path member while closing of an inflow port or inhibition of a gas flow is sufficiently achieved.

### BRIEF DESCRIPTION OF DRAWINGS

[FIG. 1] FIG. 1 is a perspective view illustrating an exhaust heat recovery device according to a first embodiment of the present invention.
[FIG. 2] FIG. 2 is a partially cutaway front view of the exhaust heat recovery device according to the first embodiment.
[FIG. 3] FIG. 3 is a side view illustrating a heat recovery state of the exhaust heat recovery device according to the first embodiment as viewed from an upstream side of a first flow path.
[FIG. 4] FIG. 4 is a perspective view illustrating a valve mechanism of the exhaust heat recovery device according to the first embodiment.
[FIG. 5] FIG. 5 is a partially cutaway front view of the exhaust heat recovery device according to the first embodiment.
[FIG. 6] FIG. 6 is a side view illustrating a non-heat recovery state of the exhaust heat recovery device according to the first embodiment as viewed from the upstream side of the first flow path.
[FIG. 7] FIG. 7 is a partially cutaway front view of an exhaust heat recovery device according to a second embodiment.
[FIG. 8] FIG. 8 is a partially cutaway front view of an exhaust heat recovery device 2 according to the second embodiment.

### DESCRIPTION OF EMBODIMENTS

### [First Embodiment]

Hereinafter, an exhaust heat recovery device 1 according to a first embodiment of the present invention will be described with reference to the drawings.

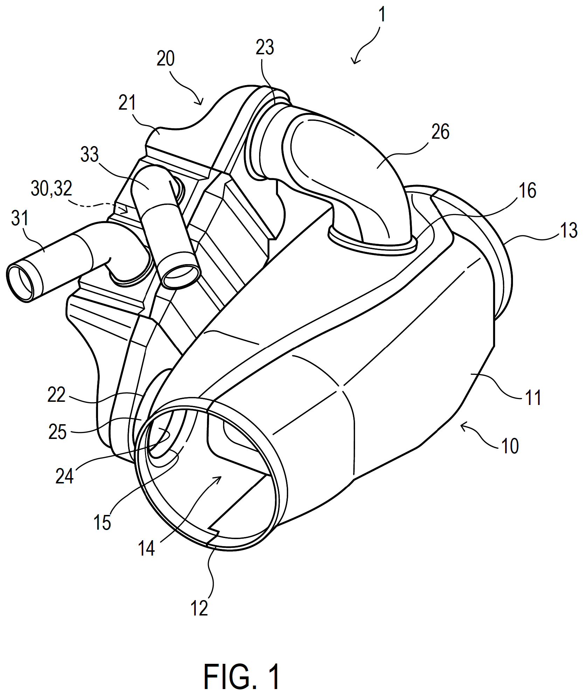

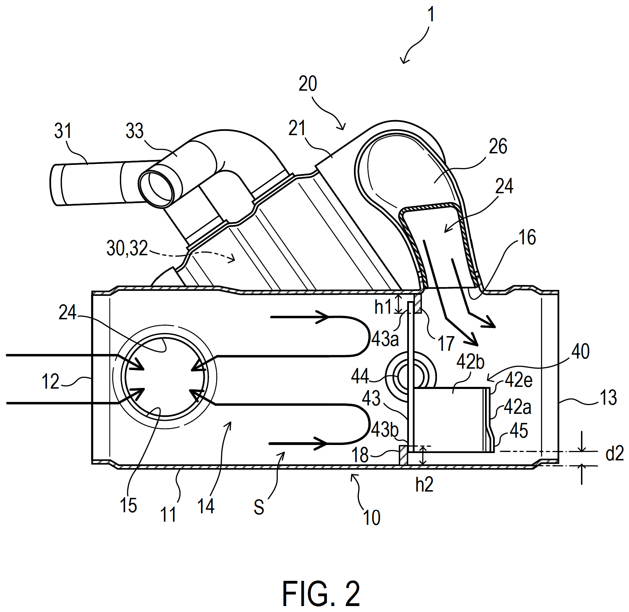

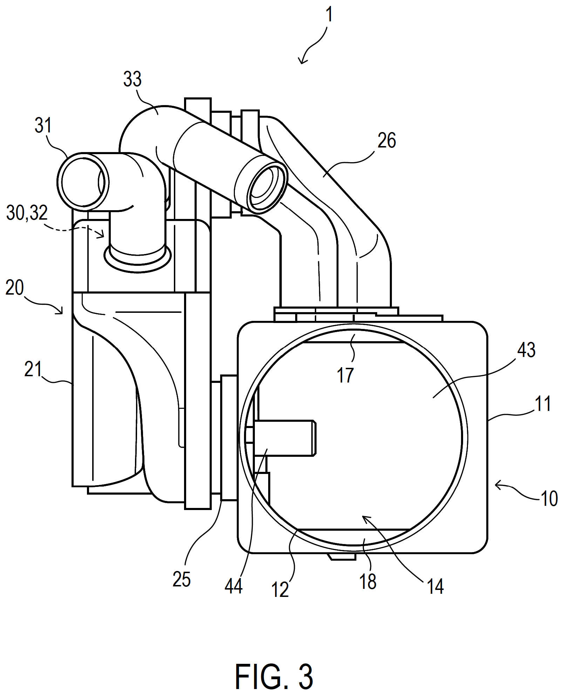

FIG. 1 is a perspective view illustrating the exhaust heat recovery device 1 according to the first embodiment of the present invention. FIG. 2 is a partially cutaway front view of the exhaust heat recovery device 1. Further, FIG. 3 is a side view of a heat recovery state of the exhaust heat recovery device 1 shown in FIG. 2 as viewed from an upstream side of a first flow path 14.

As illustrated in FIG. 1, the exhaust heat recovery device 1 includes a first flow path member 10, a second flow path member 20, and a heat exchanger 30.

The first flow path member 10 includes a main body portion 11, a first inflow portion 12, and a first outflow portion 13. The main body portion 11 has a hollow structure, and the first flow path 14 through which an exhaust gas flows is formed inside the main body portion 11.

The first inflow portion 12 is an opening on one side of the main body portion 11 and is connected to a flow path of the exhaust gas from an engine. The first outflow portion 13 is an opening on the other side of the main body portion 11 and is connected to a flow path of the exhaust gas. In an exhaust gas flow, the first inflow portion 12 is located upstream of the first outflow portion 13.

In the main body portion 11, a first upstream side opening portion 15 as an outflow port through which the exhaust gas flows out from the first flow path 14 to a second flow path 24 (see FIG. 2) and a first downstream side opening portion 16 as an inflow port through which the exhaust gas flows into the first flow path 14 from the second flow path 24 are formed.

The second flow path member 20 is provided adjacent to the first flow path member 10. The second flow path member 20 includes a main body portion 21, a second upstream side opening portion 22, and a second downstream side opening portion 23.

The main body portion 21 has a hollow structure, and the second flow path 24 through which the exhaust gas bypassing a part of the first flow path 14 flows is formed inside the main body portion 21.

The second upstream side opening portion 22 is located upstream in the second flow path 24 and takes the exhaust gas bypassing the part of the first flow path 14 into an inside of the main body portion 21. The second downstream side opening portion 23 allows the exhaust gas flowing in the main body portion 21 to flow to the first flow path 14.

The second upstream side opening portion 22 is connected to the first upstream side opening portion 15 formed in the first flow path member 10 by a first communication portion 25. Further, the second downstream side opening portion 23 is connected to the first downstream side opening portion 16 formed in the first flow path member 10 by a second communication portion 26.

An inside of the first communication portion 25, an inside of the second flow path member 20, and an inside of the second communication portion 26 constitute the second flow path 24.

By the first flow path member 10 and the second flow path member 20 described above, the exhaust gas can be bypassed from the first flow path 14 to the second flow path member 20 through the first communication portion 25. Further, the exhaust gas flowing through the second flow path member 20 can flow to the first flow path 14 through the second communication portion 26.

The second flow path member 20 includes the heat exchanger 30. The heat exchanger 30 includes a refrigerant inflow portion 31, a heat exchanger body portion 32, and a refrigerant outflow portion 33, and causes coolant water to flow as a refrigerant. The heat exchanger 30 exchanges heat between the exhaust gas flowing through the second flow path 24 and the refrigerant.

The refrigerant inflow portion 31 is a hollow tubular portion that connects a flow path (not shown) through which the coolant water before cooling the engine flows and an inside of the heat exchanger body portion 32. The refrigerant inflow portion 31 allows the coolant water as the refrigerant supplied from the flow path to flow into the heat exchanger body portion 32.

The refrigerant outflow portion 33 is a hollow tubular portion that connects the inside of the heat exchanger body portion 32 and a flow path (not shown) for supplying the coolant water to the engine. The refrigerant inflow portion 31 causes the coolant water flowing in the heat exchanger body portion 32 to flow into the flow path.

When the exhaust gas flows through a portion of the main body portion 21 of the second flow path member 20, which is surrounded by the heat exchanger body portion 32 (portion of the second flow path 24, which is surrounded by the heat exchanger body portion 32), the heat exchanger 30 can perform heat exchange between the exhaust gas and the coolant water flowing in the heat exchanger body portion 32 to move heat of the exhaust gas to the coolant water and recover the heat. A state in which a valve mechanism 40 to be described later closes the first flow path 14 and the exhaust gas flows through the second flow path 24 to perform the heat exchange is referred to as the heat recovery state. On the other hand, a state in which the valve mechanism 40 opens the first flow path 14 and the exhaust gas does not flow through the second flow path 24 is referred to as a non-heat recovery state.

In the first embodiment, the first flow path member 10 includes a first rising portion 17 rising toward an inside of the first flow path 14. The first rising portion 17 is located upstream of the first downstream side opening portion 16 in the first flow path 14. It can also be said that the first rising portion 17 is disposed between the first upstream side opening portion 15 and the first downstream side opening portion 16 on an inner surface of the first flow path member 10. Further, the first rising portion 17 is formed over the first downstream side opening portion 16 in a direction orthogonal to a flow direction of the exhaust gas.

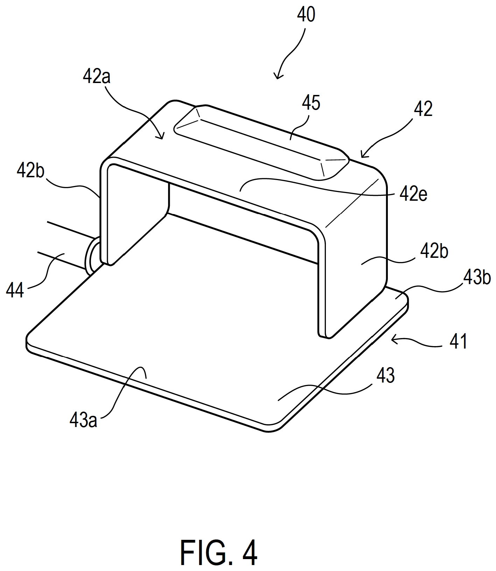

The first flow path member 10 includes a second rising portion 18 rising toward the inside of the first flow path 14 on the inner surface of the first flow path member 10. On the inner surface of the first flow path member 10, the second rising portion 18 is disposed on a surface on a side facing a surface on which the first rising portion 17 is formed. In the heat recovery state, the second rising portion 18 is located upstream of a valve body 43 (FIG. 4) of the valve mechanism 40. Further, the second rising portion 18 is formed in the direction orthogonal to the flow direction of the exhaust gas.

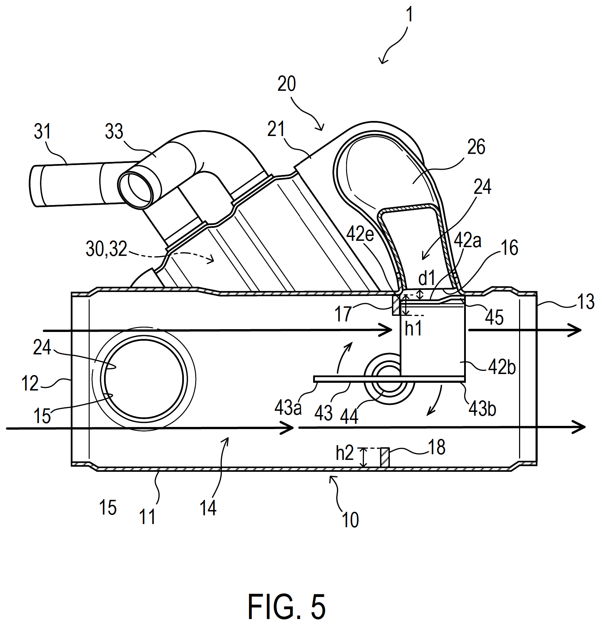

In the present embodiment, in the non-heat recovery state (FIG. 5), the first rising portion 17 is formed such that a height h1 thereof from the inner surface of the first flow path member 10 is larger than a gap d1 formed in a direction of separation between the first downstream side opening portion 16 and the valve mechanism 40 (shutter portion 42). Further, in the heat recovery state (FIG. 2) of the valve mechanism 40, the second rising portion 18 is formed such that a height h2 thereof from the inner surface of the first flow path member 10 is larger than a gap d2 in a direction of separation between the inner surface of the first flow path member 10 and the valve mechanism 40 (valve body 43).

As shown in FIG. 2, the exhaust heat recovery device 1 includes the valve mechanism 40 inside the first flow path member 10.

FIG. 4 is a perspective view illustrating the valve mechanism 40 of the exhaust heat recovery device 1 shown in FIG. 1.

The valve mechanism 40 includes a butterfly valve 41 that opens and closes the first flow path 14, the shutter portion 42 that blocks or inhibits the exhaust gas flowing from the second flow path 24 into the first flow path 14, and the valve body 43 that opens and closes the first flow path 14.

A rotation shaft portion 44 is connected to the valve body 43, and is rotatably supported in the first flow path 14. The rotation shaft portion 44 is connected to a drive shaft of an actuator as a drive portion (not shown).

The valve body 43 in the butterfly valve 41 is a plate-shaped member formed to have a length and a width capable of closing the first flow path 14. The valve body 43 can switch between the opening and the closing of the first flow path 14 by rotation of the rotation shaft portion 44.

The shutter portion 42 is provided on the valve body 43. The shutter portion 42 includes a plate-shaped shutter body portion 42a and a pair of connection portions 42b. The shutter body portion 42a closes the first downstream side opening portion 16 in the non-heat recovery state, and opens the first downstream side opening portion 16 in the non-heat recovery state.

Each of the connection portions 42b supports the shutter body portion 42a while maintaining a distance from the valve body 43 such that the shutter body portion 42a is not in contact with an inner wall portion (first downstream side opening portion 16) of the first flow path member 10 and can close the first downstream side opening portion 16.

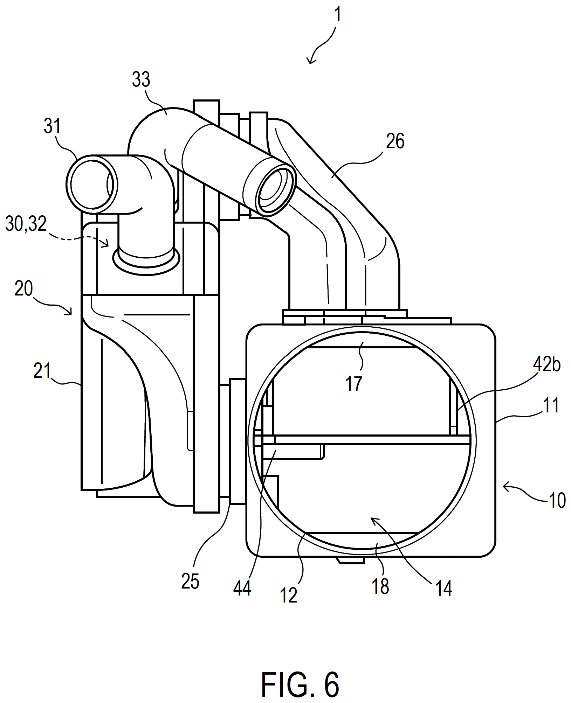

The shutter portion 42 includes a convex portion 45 protruding outward in a radial direction of rotation of the rotating valve mechanism 40. A surface of the convex portion 45 is formed in a curved surface shape, and in the non-heat recovery state (FIGS. 5 and 6), the convex portion 45 abuts on or approaches the inner surface of the first flow path member 10 on a downstream side of the first downstream side opening portion 16 in the flow direction of the exhaust gas.

In the non-heat recovery state, a tip 42e (end surface) of the shutter portion 42 on an upstream side in the flow direction of the exhaust gas is formed to abut on or approach the first rising portion 17.

### <Operation of Valve Mechanism and Flow of Exhaust gas>

Next, an operation of the valve mechanism 40 and the flow of the exhaust gas in the exhaust heat recovery device 1 according to the first embodiment will be described.

FIG. 5 is a partially cutaway front view of the exhaust heat recovery device 1. Further, FIG. 6 is a side view of the non-heat recovery state of the exhaust heat recovery device 1 shown in FIG. 5 as viewed from the upstream side of the first flow path 14.

The valve mechanism 40 in the exhaust heat recovery device 1 can switch between the heat recovery state (FIGS. 2 and 3) in which the first downstream side opening portion 16 is opened by the shutter portion 42 and the first flow path 14 is closed by the butterfly valve 41, and the non-heat recovery state (FIGS. 5 and 6) in which the first downstream side opening portion 16 is closed by the shutter portion 42 and the first flow path 14 is opened by the butterfly valve 41.

In the first embodiment, as shown in FIGS. 5 and 6, when the valve mechanism 40 rotates such that a main surface of the valve body 43 of the valve mechanism 40 is parallel to the flow direction (see an arrow in FIG. 5) of the exhaust gas and enters the non-heat recovery state, a tip 42e of the shutter portion 42 abuts on a surface of the first rising portion 17 on a downstream side in the flow direction of the exhaust gas, and the convex portion 45 formed on the shutter portion 42 abuts on the inner surface of the first flow path member 10 on the downstream side of the first downstream side opening portion 16 in the flow direction of the exhaust gas. In the non-heat recovery state, the tip 42e may abut on the first rising portion 17, and the convex portion 45 may approach the inner surface of the first flow path member 10. Further, in the non-heat recovery state, the tip 42e may approach the first rising portion 17, and the convex portion 45 may abut on the inner surface of the first flow path member 10. In the non-heat recovery state, the tip 42e may abut on the first rising portion 17, and the convex portion 45 may also abut on the inner surface of the first flow path member 10. The term "approach" here refers to a state in which two objects face each other with a small gap therebetween.

In this state, the exhaust gas flows into the first flow path member 10 from the first inflow portion 12, flows through the first flow path 14 formed inside the first flow path member 10, and flows out from the first outflow portion 13.

On the other hand, as an end portion 43a of the valve body 43 located on the upstream side in the flow direction in the non-heat recovery state rotates in a direction approaching the first rising portion 17 and an end portion 43b of the valve body 43 located on the downstream side in the flow direction rotates in a direction approaching the second rising portion 18, the valve mechanism 40 rotates such that the main surface of the valve body 43 of the valve mechanism 40 is orthogonal to the flow direction of the exhaust gas, and enters the heat recovery state. The second rising portion 18 will be described later.

As shown in FIGS. 2 and 3, in the heat recovery state, a surface of the first rising portion 17 on the upstream side in the flow direction abuts on a surface of the end portion 43a of the valve body 43 on the downstream side in the flow direction. Further, a surface of the second rising portion 18 on the downstream side in the flow direction abuts on a surface of the end portion 43b of the valve body 43 on the upstream side in the flow direction.

In this state, when the exhaust gas flows into the first flow path member 10 from the first inflow portion 12, the exhaust gas stays in a space S formed by the valve body 43 and the first flow path member 10, and flows into the second flow path 24 from the first upstream side opening portion 15 (see an arrow in FIG. 2).

In the heat recovery state, the configuration may be such that the surface of the first rising portion 17 on the upstream side abuts on the surface of the end portion 43a of the valve body 43 on the downstream side, or the surface of the second rising portion 18 on the downstream side abuts on the surface of the end portion 43b of the valve body 43 on the upstream side.

The exhaust gas flows through the second flow path 24 inside the second flow path member 20 and exchanges the heat with the refrigerant flowing through the heat exchanger 30. After the exhaust gas flows through the second flow path 24, the exhaust gas returns from the first downstream side opening portion 16 to the first flow path 14, flows through the first flow path, and flows out from the first outflow portion 13.

### <Functions and Effects>

The exhaust heat recovery device 1 according to the first embodiment includes the first flow path member 10 in which the first flow path 14 through which the exhaust gas flows is formed, the second flow path member 20 which is provided adjacent to the first flow path member 10, in which the second flow path 24 bypassing a part of the first flow path 14 is formed, and which includes the heat exchanger 30 that performs the heat exchange between the exhaust gas flowing through the second flow path 24 and the refrigerant, and the valve mechanism 40 which is disposed in the first flow path member 10 and which includes the butterfly valve 41 that opens and closes the first flow path 14 and the shutter portion 42 that blocks or inhibits the flow of the exhaust gas from the second flow path 24.

In the first flow path member 10, the first upstream side opening portion 15 as the outflow port of the exhaust gas from the first flow path 14 to the second flow path 24 and the first downstream side opening portion 16 as the inflow port of the exhaust gas from the second flow path 24 to the first flow path 14 are formed.

The valve mechanism 40 is formed to be switched between the heat recovery state and the non-heat recovery state by the rotation of the rotation shaft portion 44 orthogonal to the flow direction of the exhaust gas in the first flow path 14. As described above, in the non-heat recovery state, the shutter portion 42 closes the first downstream side opening portion 16, and the butterfly valve 41 opens the first flow path 14. In the heat recovery state, the shutter portion 42 opens the first downstream side opening portion 16, and the butterfly valve 41 closes the first flow path 14.

The first flow path member 10 includes the first rising portion 17 rising toward the inside of the first flow path 14 in the direction (from an outside to the inside of the first flow path 14) orthogonal to the flow direction of the exhaust gas. The first rising portion 17 is located upstream of the first downstream side opening portion 16 in the first flow path 14. Further, in the direction from the outside to the inside of the first flow path 14, the first rising portion 17 is formed to be larger than the gap d1 formed in the direction of separation between the first downstream side opening portion 16 and the shutter portion 42 that closes the first downstream side opening portion 16 in the non-heat recovery state.

Therefore, in the non-heat recovery state, the first rising portion 17 can block the gap d1 formed in the direction of separation between the first downstream side opening portion 16 and the shutter portion 42. Here, when the exhaust gas flows through the first flow path 14, the exhaust gas is easily drawn from the second flow path 24 in the first downstream side opening portion 16 due to the flow. However, in the exhaust heat recovery device 1, even though there is the gap between the shutter portion 42 and the first downstream side opening portion 16, such drawing of the exhaust gas is prevented by forming the first rising portion 17. Accordingly, at the first upstream side opening portion 15, the exhaust gas can be prevented from flowing into the second flow path 24.

Therefore, it is possible to prevent the inflow of the exhaust gas into the heat exchanger 30 when heat recovery from the exhaust gas is unnecessary, and to prevent a decrease in gas exhausting efficiency.

In an exhaust heat recovery device in the related art, a first flow path is opened and a second flow path is closed by bringing a main surface of a shutter portion formed in a tubular shape into surface contact with an inner wall of a first flow path member. However, in such a structure, when an error occurs between a dimension of the shutter portion and a dimension of the inner wall (inner circumference) of the first flow path member, corner contact in which a part of the shutter portion interferes with the inner wall of the first flow path member may occur.

On the other hand, since the exhaust heat recovery device 1 includes the first rising portion 17 and the gap d1 described above is formed, there is no concern that the valve mechanism 40 and the inner surface of the first flow path member 10 come into contact with each other due to the rotation operation of the valve mechanism 40 even when sizes and arrangement positions of the valve mechanism 40 and the first flow path member 10 are not strictly designed. According to the exhaust heat recovery device 1, it is possible to prevent the occurrence of the corner contact in which the part of the shutter portion interferes with the inner wall of the first flow path member. In addition, according to the exhaust heat recovery device 1, in the non-heat recovery state of the valve mechanism 40, it is possible to sufficiently block or inhibit the gas flow from the second flow path 24 at the first downstream side opening portion 16.

The first flow path member 10 includes, on the inner surface facing the first rising portion 17, the second rising portion 18 rising toward the inside of the first flow path 14 in the direction orthogonal to the flow direction of the exhaust gas.

The second rising portion 18 is larger than the gap d2 in the direction of separation between the inner surface of the first flow path member 10 and the butterfly valve 41 in the heat recovery state of the valve mechanism 40, and is formed downstream of the butterfly valve 41 when the valve mechanism 40 is in the heat recovery state.

In the heat recovery state of the valve mechanism 40, the second rising portion 18 can block, from the downstream side, the gap d2 in the direction of separation between the inner surface of the first flow path member 10 and the butterfly valve 41.

Accordingly, in the heat recovery state in which the shutter portion 42 opens the first downstream side opening portion 16 and the butterfly valve 41 closes the first flow path 14, it is possible to prevent the exhaust gas from flowing through the first flow path 14.

Therefore, the exhaust heat recovery device 1 can prevent leakage of the exhaust gas to the first flow path 14 when the heat recovery from the exhaust gas is necessary, and can prevent a decrease in heat recovery efficiency.

In the heat recovery state of the exhaust heat recovery device 1 according to the first embodiment, the surface of the end portion of the valve body 43 of the valve mechanism 40 on the downstream side in the flow direction abuts on the surface of the first rising portion 17 on the upstream side in the flow direction. Further, the surface of the end portion of the valve body 43 on the upstream side in the flow direction abuts on the surface of the second rising portion 18 on the downstream side in the flow direction.

Accordingly, the first rising portion 17 and the second rising portion 18 contribute to positioning of the butterfly valve 41 in the heat recovery state of the valve mechanism 40.

Therefore, effects of preventing the leakage of the exhaust gas to the first flow path 14 when the heat recovery from the exhaust gas is necessary and preventing the decrease in heat recovery efficiency are promoted.

If the valve mechanism 40 is formed to abut on one of the first rising portion 17 and the second rising portion 18, a positioning effect of the butterfly valve 41 in the heat recovery state of the valve mechanism 40 can be obtained.

The shutter portion 42 includes the convex portion 45 protruding outward in the radial direction of the rotation of the rotating valve mechanism 40. In the non-heat recovery state of the valve mechanism 40, the convex portion 45 abuts on the inner surface of the first flow path member 10 on the downstream side of the first downstream side opening portion 16 in the flow direction of the exhaust gas.

Since the end portion of the valve mechanism 40 on the upstream side in the flow direction of the exhaust gas precedes when the valve mechanism 40 performs the rotation operation, the end portion is likely to come into contact with the inner surface of the first flow path member 10. In contrast, according to the exhaust heat recovery device 1, the shutter portion 42 includes the convex portion 45. Therefore, even if the gap between the end portion of the valve mechanism 40 on the upstream side in the flow direction of the exhaust gas and the inner surface of the first flow path member 10 is designed with enough margin to prevent contact, the end portion of the valve mechanism 40 on the downstream side in the flow direction of the exhaust gas abuts on the convex portion 45. Accordingly, the shutter portion 42 is positioned in the non-heat recovery state of the valve mechanism 40. Since the convex portion 45 is in contact with the inner surface of the first flow path member 10 from an obtuse angle direction and the surface of the convex portion 45 is formed in the curved surface shape, galling (biting into the inner surface) is less likely to occur.

### [Second Embodiment]

Next, an exhaust heat recovery device 2 according to a second embodiment of the present invention will be described with reference to the drawings. In the second embodiment, components having the same functions as those in the first embodiment are denoted by the same reference numerals, and detailed description thereof will be omitted.

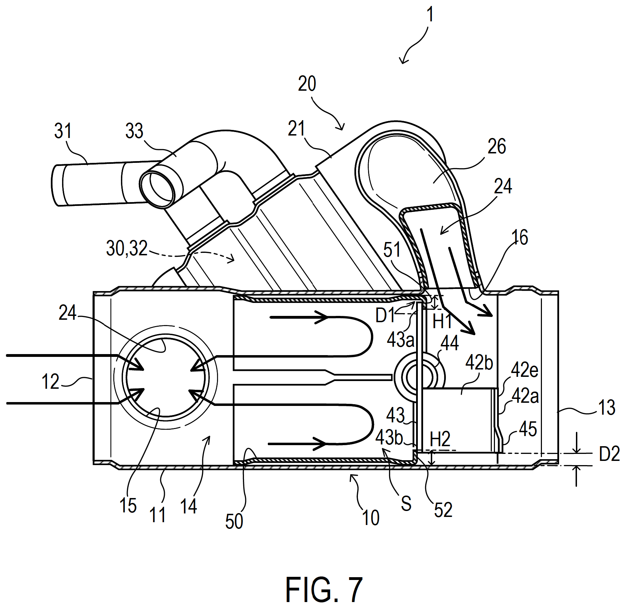

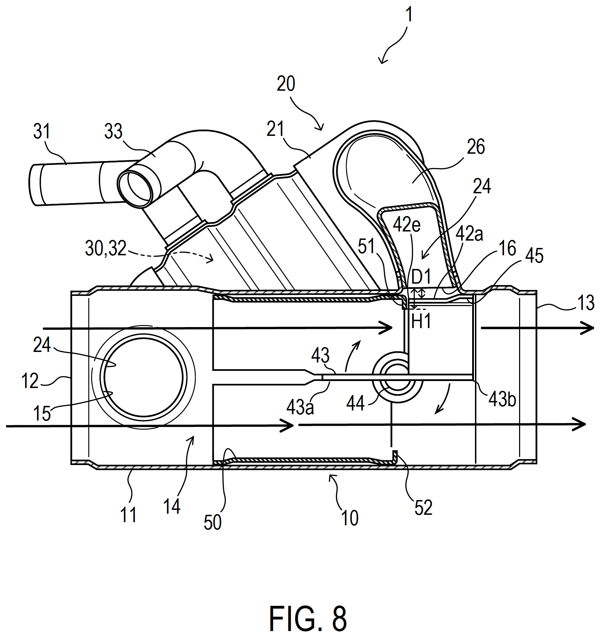

FIGS. 7 and 8 are partially cutaway front views of the exhaust heat recovery device 2 according to the second embodiment. FIG. 7 illustrates the valve mechanism 40 in the exhaust heat recovery device 2 in a heat recovery state, and FIG. 8 illustrates the valve mechanism 40 in a non-heat recovery state.

In the second embodiment, the first rising portion 17 and the second rising portion 18 in the first embodiment are formed at a downstream end portion of an inner member 70 in a flow direction of a exhaust gas.

That is, the exhaust heat recovery device 2 includes an inner member 50 that covers at least a part of an inner surface of the first flow path member 10 inside the first flow path member 10. In the inner member 50, a first rising portion 51 folded back toward an inside of the first flow path 14 and a second rising portion 52 are integrally formed.

In the second embodiment, in the non-heat recovery state (FIG. 8) of the valve mechanism 40, the first rising portion 51 is formed such that a height H1 thereof from the inner surface of the first flow path member 10 is larger than a gap D1 formed in a direction of separation between the first downstream side opening portion 16 and the valve mechanism 40 (shutter portion 42). Further, in the heat recovery state (FIG. 7) of the valve mechanism 40, the second rising portion 52 is formed such that a height H2 thereof from the inner surface of the first flow path member 10 is larger than a gap D2 in a direction of separation between the inner surface of the first flow path member 10 and the valve mechanism 40 (valve body 43).

In the exhaust heat recovery device 2, when the valve mechanism 40 is in the heat recovery state, a surface of the first rising portion 51 on a upstream side in the flow direction abuts on a surface of the end portion 43a of the valve body 43 on a downstream side in the flow direction. Further, a surface of the second rising portion 52 on the downstream side in the flow direction abuts on a surface of the end portion 43b of the valve body 43 on the upstream side in the flow direction.

Accordingly, the first rising portion 51 and the second rising portion 52 contribute to positioning of the butterfly valve 41 in the heat recovery state of the valve mechanism 40.

Therefore, in the exhaust heat recovery device 2, effects of preventing leakage of the exhaust gas to the first flow path 14 when heat recovery from the exhaust gas is necessary and preventing a decrease in heat recovery efficiency are promoted.

In the exhaust heat recovery device 2 according to the second embodiment, the exhaust gas comes into contact with the inner member 50 provided inside the first flow path member 10. Therefore, a difference in thermal stress that occurs in the first flow path member 10 due to heat of the exhaust gas can be reduced. Therefore, heat resistance strength of the exhaust heat recovery device 2 can be increased.

### [Other Embodiments]

Although the embodiments of the present invention have been described above, the above embodiments are merely a part of application examples of the present invention, and are not intended to limit the technical scope of the present invention to the specific configurations of the above embodiments.

In the first embodiment, a fluid that cools the exhaust gas may be a fluid other than the coolant water, and a medium such as a liquid or a gas suitable for heat exchange can be applied.

In the present embodiment, the valve mechanism 40 has a structure in which the pair of connection portions 42b support both ends of the shutter body portion 42a. On the other hand, for example, one connection portion 42b may be provided in a central portion of the shutter body portion 42a. Further, a louver in which a plurality of connection portions 42b are arranged in parallel may be used.

In the exhaust heat recovery device 2 according to the second embodiment, the inner member 50 provided inside the first flow path member 10 may be divided along a horizontal plane including an axis of the rotation shaft portion 44 of the valve mechanism 40. Further, the inner member 50 may be divided along a plane perpendicular to the axis of the rotation shaft portion 44 of the valve mechanism 40.

The present application claims priority under Japanese Patent Application No. 2023-117570 filed to the Japan Patent Office on July 19, 2023, and the entire content of this application is incorporated herein by reference.

## Claims

1. An exhaust heat recovery device that recovers heat of a exhaust gas exhausted from an engine by heat exchange with a fluid, the device comprising:
a first flow path member in which a first flow path through which a exhaust gas flows is formed;
a second flow path member which is provided adjacent to the first flow path member, in which a second flow path bypassing a part of the first flow path is formed, and which includes a heat exchanger that performs heat exchange between the exhaust gas flowing in the second flow path and the fluid; and
a valve mechanism which is provided in the first flow path, wherein
the first flow path member includes
an outflow port for the exhaust gas from the first flow path to the second flow path,
an inflow port for the exhaust gas from the second flow path to the first flow path, and
a first rising portion located upstream of the inflow port in the first flow path, extending in a direction orthogonal to a flow direction of the exhaust gas, and rising toward an inside of the first flow path,
the valve mechanism includes
a rotation shaft portion,
a valve body configured to rotate with rotation of the rotation shaft portion and to close or open the first flow path, and
a shutter portion configured to rotate with the rotation of the rotation shaft portion and to block or inhibit a flow of the exhaust gas from the inflow port,
in a heat recovery state, the valve body of the valve mechanism closes the first flow path, and the shutter portion releases a flow of the exhaust gas from the inflow port,
in a non-heat recovery state, the valve body of the valve mechanism opens the first flow path, and the shutter portion blocks or inhibits a flow of the exhaust gas from the inflow port,
in the non-heat recovery state, a gap is formed in a direction of separation between the inflow port and the shutter portion,
the first rising portion is formed to be larger than the gap in a height direction from an outside to the inside of the first flow path, and
a tip of the shutter portion abuts on or approaches the first rising portion in the non-heat recovery state.

2. The exhaust heat recovery device according to claim 1, wherein
the shutter portion includes a convex portion protruding outward in a radial direction of rotation of the rotating valve mechanism,
the convex portion abuts on or approaches an inner wall of the first flow path member on a downstream side of the inflow port in the flow direction of the exhaust gas in the non-heat recovery state, and
in the non-heat recovery state, the rotation of the valve mechanism is restricted by at least one of the tip of the shutter portion abutting on the first rising portion or the convex portion abutting on the inner wall of the first flow path member.

3. The exhaust heat recovery device according to claim 1, wherein
in the first rising portion, a surface on a downstream side in the flow direction of the exhaust gas abuts on or faces the tip of the shutter portion, and a surface on an upstream side in the flow direction of the exhaust gas abuts on or faces the valve body.

4. The exhaust heat recovery device according to claim 1, wherein
the first flow path member includes a second rising portion extending in the direction orthogonal to the flow direction of the exhaust gas and rising toward the inside of the first flow path,
the second rising portion is located on an inner surface of the first flow path on a side facing the first rising portion and on an upstream side of a exhaust gas flow with respect to the first rising portion,
in the heat recovery state, a surface of the first rising portion on an upstream side in the flow direction of the exhaust gas abuts on or faces the valve body,
in the heat recovery state, a surface of the second rising portion on a downstream side in the flow direction of the exhaust gas abuts on or faces the valve body, and
in the heat recovery state, the valve body abuts on at least one of the first rising portion or the second rising portion.

5. The exhaust heat recovery device according to claim 4, further comprising:
an inner member covering at least a part of the inner surface, wherein
the first rising portion and the second rising portion are formed at a downstream end portion of the inner member in the flow direction of the exhaust gas.
